# FASCICULE DE BREVET EUROPEEN

(11) **EP 0 732 301 B1**
(45) Date de publication et mention de la délivrance du brevet: **06.06.2001**
(21) Numéro de dépôt: 96400436.0
(22) Date de dépôt: 01.03.1996
(51) Int. Cl.: B67D 5/371, F16K 15/14

(54) **Dispositif de limitation de perte de liquide, adaptable sur un organe de distribution de liquide sous pression**
Vorrichtung zur Begrenzung der Verluste von Flüssigkeiten, anpassbar an eine Abgabevorrichtung für unter Druck stehende Flüssigkeiten
Device for limiting the liquid loss adaptable to a device for dispensing pressurized fluid

(30) Priorité: 17.03.1995 FR 9503105
(43) Date de publication de la demande: 18.09.1996
(73) Titulaire: TOTAL RAFFINAGE DISTRIBUTION S.A., 92800 Puteaux (FR)
(72) Inventeur: Orgeolet, Alain, 59650 Villeneuve d'Asq (FR); Rauli, Gilbert, 22120 Yssiniac (FR); Stassen, Pierre, 22100 Lehon (FR); Lallinec, Yannick, 29000 Quimper (FR)
(74) Mandataire: Jolly, Jean-Pierre

(56) Documents cités:
- WO-A-88/09867
- DE-B- 1 014 867
- US-A- 2 291 603
- US-A- 4 213 488

## Description

La présente invention concerne un dispositif de limitation de perte de liquide, adaptable sur un organe de distribution de liquide sous pression.

De tels organes de distribution sont utilisés pour remplir divers contenants, par exemple, des bouteilles, des bidons ou des flacons. On mentionnera plus particulièrement les pistolets distributeurs de carburants liquides, notamment pour automobiles. Pendant la distribution, les organes distributeurs retiennent le liquide au niveau de leurs surfaces amenées à entrer en contact avec celui-ci. Ce liquide a ensuite tendance à s'égoutter naturellement après arrêt de la distribution et séparation de l'organe distributeur du réceptacle de liquide. Il en résulte non seulement des pertes de liquide, mais également des atteintes à l'environnement et, parfois, des risques pour les personnes qui viennent à son contact, lorsqu'il s'agit de produits toxiques ou inflammables.

La présente invention vise à remédier à ces inconvénients de la technique antérieure, en proposant un dispositif limiteur de pertes de liquide, qui puisse être adapté aisément à un organe distributeur de liquide sous pression, en réduisant considérablement les- pertes de liquide inhérentes au mode de distribution.

On connaît par WO-A-88/09867 un système d'injection de carburant d'un moteur d'automobile, dans lequel une soupape anti-retour est interposée entre l'injecteur et une pompe électrique d'alimentation disposée dans le réservoir à carburant. Cette soupape ne laisse passer l'essence que dans un sens, en direction de l'injecteur, lorsque le moteur fonctionne, et s'oppose à un retour en arrière du carburant vers le réservoir, lorsque le moteur ne fonctionne pas, afin, dans ce cas, de maintenir pleine de carburant la conduite qui réunit la soupape à l'injecteur.

Cette soupape comporte un clapet en forme de parapluie, qui prend appui par sa périphérie sur son siège. Ce clapet est en un élastomère souple et il ne comporte pas de ressort de rappel, en vue de supprimer les bruits parasites lors du fonctionnement, ce qui est le but recherché. Le clapet est monobloc et ses bords se soulèvent pour laisser passer le carburant, lors de l'alimentation de l'injecteur, la pression du carburant en aval de la soupape étant suffisante pour ramener ces bords en appui sur leur siège, lorsque le moteur ne fonctionne pas.

La présente invention vise à proposer un dispositif de limitation de perte de liquide, adaptable sur un organe de distribution de liquide sous pression, qui comporte lui aussi un organe formant soupape, déformable élastiquement, mais dans lequel cet organe revient à l'arrêt sur son siège de par sa seule élasticité et non sous la sollicitation de liquide éventuellement présent en aval, car ce liquide est normalement absent.

L'invention a par conséquent pour objet un dispositif de limitation de perte de liquide adaptable à un organe de distribution d'un liquide sous pression, ce dispositif étant caractérisé en ce qu'il comprend :
- un élément tubulaire principal, apte à être fixé par sa périphérie à l'extrémité libre de l'organe de distribution, cet élément tubulaire comportant une partie tubulaire interne de plus petit diamètre, qui est rigidement solidaire de l'élément tubulaire et coaxiale à celui-ci, des passages étant prévus pour le liquide sous pression entre la partie tubulaire interne et l'élément tubulaire principal ;
- une membrane élastique de forme tronconique, apte à prendre appui par son extrémité de plus grand diamètre contre une première portée de l'élément tubulaire et par son extrémité de plus petit diamètre contre une seconde portée de ladite partie tubulaire interne ou d'un organe solidaire de celle-ci, la seconde portée étant disposée en aval de la première portée dans le sens d'écoulement du liquide ;
- un pion central dont la tige est engagée dans ladite portée tubulaire, ce pion comprenant une tête, qui est disposée en aval de ladite membrane, dans le sens d'écoulement du liquide, et dont une partie en saillie dirigée vers l'amont est en contact avec la face tournée vers l'aval de la membrane ;
la membrane étant déformable élastiquement, de manière à pouvoir occuper deux positions, à savoir :
* une position de repos, dans laquelle elle comporte trois zones d'appui, respectivement contre la première portée et la deuxième portée et contre la partie en saillie de la tête du pion ;
* et une position déformée, dans laquelle son extrémité de plus grand diamètre est soulevée de la première portée sous la sollicitation du liquide sous pression pour laisser un libre passage à ce liquide, la membrane restant toutefois en contact, dans cette position, avec la seconde portée et avec la partie en saillie de la tête du pion.

La membrane décollera de la première portée de l'élément tubulaire qui lui sert de siège, sous la sollicitation du liquide sous pression dès que cette pression dépassera une valeur de consigne relativement faible et elle restera en position écartée de son siège pour une pression d'écoulement du liquide encore plus faible que la pression de consigne.

Lorsque le liquide sous pression ne sollicite plus la membrane, c'est-à-dire quand la distribution du liquide est interrompue, la membrane, du fait de son élasticité, subit un effort de rappel vers la portée de l'élément tubulaire qui lui sert de siège, sur laquelle elle reprend appui, en obturant transversalement l'organe tubulaire de façon hermétique et en s'opposant ainsi à la pénétration dans le système de distribution de corps ou de produits étrangers en provenance de l'extérieur.

Le liquide retenu à l'intérieur du dispositif sera évacué à l'occasion de la prochaine opération de distribution, sans se répandre en dehors du dispositif pendant les périodes de manipulation de l'organe de distribution.

De manière avantageuse, la partie en saillie de la tête du pion central possède une zone d'appui sur la membrane, qui est plus proche de l'extrémité aval de la membrane, dans le sens d'écoulement du liquide, que de son extrémité amont. De la sorte, la membrane est à même de se soulever plus aisément de la première portée de l'élément tubulaire, sous l'effet du liquide sous pression.

La seconde portée pourra être constituée par l'extrémité aval de la partie tubulaire interne.

La première portée pourra être constituée par un épaulement interne de l'élément tubulaire principal.

Le pion central pourra avoir par exemple la forme générale d'un champignon, dont la tête tournée vers l'aval prend appui sur la membrane par l'intermédiaire d'un bourrelet périphérique et dont la tige, disposée suivant l'axe de l'élément tubulaire, est rigidement solidaire de celui-ci.

L'élément tubulaire interne fera partie intégrante du dispositif et sera rigidement solidaire de l'élément tubulaire principal par l'intermédiaire de bras ou de flasques disposés dans des plans passant par l'axe de cet élément tubulaire principal et entre lesquels le liquide sous pression circulera librement.

Le dispositif conforme à l'invention pourra être rendu solidaire de l'organe de distribution du liquide sous pression par tout moyen connu dans la technique. Il pourra en particulier, être vissé sur cet organe ou emboîté à force sur ou dans celui-ci, à la manière d'un embout.

Le dispositif conforme à l'invention présente l'avantage de ne pas perturber de façon appréciable les systèmes de régulation et de contrôle associés au distributeur de liquide. Il permet en outre d'assurer une distribution dans des conditions de débit sensiblement analogues à celles d'un organe de distribution dépourvu du dispositif, et il ne s'oppose pas à une distribution à faible débit, permettant de réaliser un appoint éventuel de liquide.

Un organe de distribution équipé d'un dispositif conforme à l'invention possède alors une caractéristique dite " antigoutte ". Une telle dénomination désigne un organe empêchant tout écoulement intempestif de liquide distribué.

Le dispositif conforme à l'invention constitue en outre une barrière efficace contre la pénétration de polluants extérieurs dans le liquide se trouvant à l'intérieur de l'organe de distribution.

Un tel dispositif de limitation de perte de liquide est ainsi particulièrement bien adapté aux pistolets distributeurs de carburants (essence, supercarburant ou gazole) utilisés dans les stations-service, mais il convient également à des organes de distribution de bien d'autres types de liquides, notamment de produits toxiques, de produits alimentaires (lait, vin, etc...), de produits salissants ou de produits liquides pharmaceutiques coûteux, dont il est important de limiter les pertes au maximum.

Les dimensions et la forme des éléments tubulaires constituant le dispositif conforme à l'invention, seront naturellement adaptées à la nature du liquide à distribuer, à la pression de distribution et au débit souhaité.

Dans le cas où le dispositif conforme à l'invention équipe un pistolet distributeur de carburants, appelé à pénétrer dans le réservoir d'un véhicule, ce pistolet pourra, de façon usuelle, comporter un canal de détection de trop-plein, commandant automatiquement l'arrêt de la distribution lorsque le niveau du liquide dans le réservoir atteint le pistolet. Le fonctionnement de ce canal de détection ne sera aucunement affecté par la présence du dispositif conforme à l'invention. Le dispositif conforme à l'invention pourra alors avantageusement être constitué de parties en des matières plastiques judicieusement choisies, de manière à ne pas détériorer le réceptacle de liquide lorsqu'elles entrent à son contact.

Les essais que l'on exposera dans la suite de la présente description montrent que les pertes de liquide peuvent être réduites d'un facteur au moins égal à 10 et souvent très largement supérieur, par rapport à un organe de distribution non-équipé du dispositif conforme à l'invention.

Des formes de réalisation de l'invention vont être décrites ci-après plus en détail, en référence aux dessins annexés, qui n'ont pas de caractère limitatif. Sur ces dessins :
La figure 1 est une coupe axiale du dispositif disposé à l'extrémité d'un organe tubulaire de distribution de liquide sous pression, représenté avec la membrane du dispositif non sollicitée par ce liquide ;
La figure 2 est une vue de bout de ce dispositif ;
La figure 3 est une vue analogue à la figure 1, avec la membrane sollicitée par le liquide sous pression, dans la position où elle laisse ce liquide s'écouler ;
La figure 4 est une vue analogue à la figure 1, représentant le dispositif conforme à l'invention monté à l'extrémité d'un organe tubulaire de distribution de liquide sous pression équipé d'un canal de détection de trop-plein.

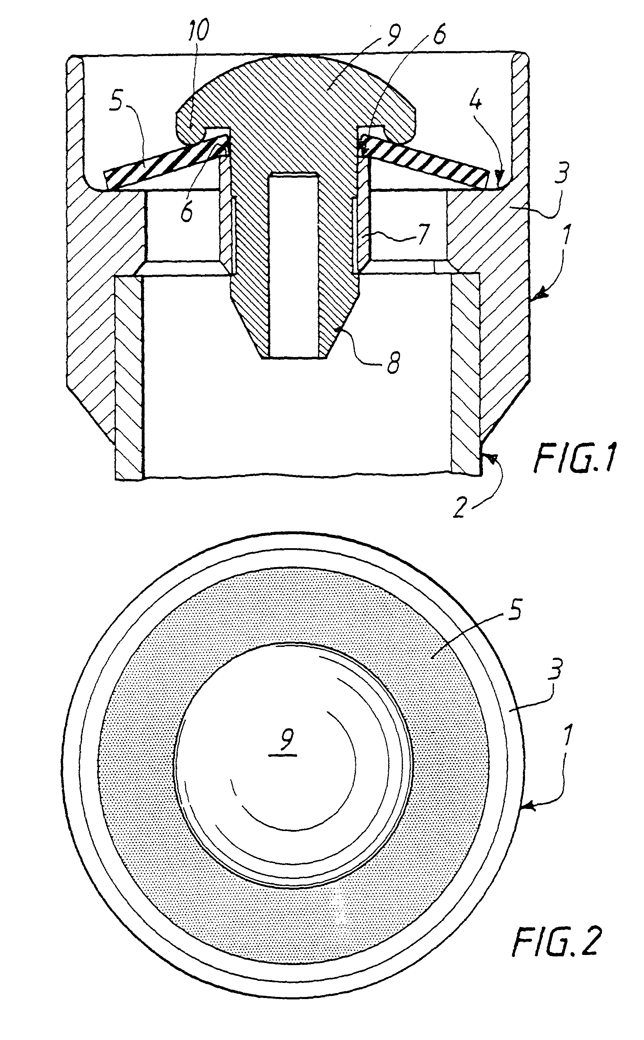

On se référera d'abord aux figures 1 à 3, sur lesquelles le dispositif conforme à l'invention, désigné par la référence générale 1, est représenté emboîté à force à l'extrémité du tube 2 d'un distributeur de liquide. Comme il a été indiqué ci-dessus, le dispositif 1 pourrait aussi bien être vissé sur le tube 2 ou être rendu solidaire de celui-ci par tout autre moyen.

Le dispositif 1 comprend un élément tubulaire 3 possédant une ouverture centrale, qui coiffe l'extrémité du tube 2 et dont un épaulement 4 définit une première portée pour une membrane tronconique 5 en un matériau élastiquement déformable, par exemple en un élastomère, faisant office de joint d'étanchéité. La membrane 5 prend appui sur l'épaulement 4 par la périphérie extérieure de sa face tournée vers l'amont, par rapport au sens d'écoulement du liquide.

La partie de plus petit diamètre de la membrane 5 est disposée en aval de l'épaulement 4 et prend appui par sa face tournée vers l'amont contre l'extrémité aval 6 d'une partie tubulaire interne 7 de l'élément 1. La partie 7 est disposé coaxialement à la partie 3, en est rigidement solidaire et a un diamètre plus faible que celui-ci.

Afin de permettre le passage du liquide, des lumières non représentées sont ménagées entre la partie tubulaire 7 et l'élément extérieur 3.

A l'intérieur de cette partie 7 est logée la tige 8 d'un pion 9 en forme de champignon, dont la tête, disposée en aval, sollicite par un bourrelet périphérique 10 une portion circulaire de la face de la membrane 5 tournée vers l'aval, plus proche de la périphérie interne de la membrane que de sa périphérie externe.

Au lieu de prendre appui contre l'extrémité aval 6 de la partie tubulaire 7, la partie de petit diamètre de la membrane 5 pourrait naturellement être en appui sur un épaulement latéral de la tige 8 du pion central 9 en forme de champignon.

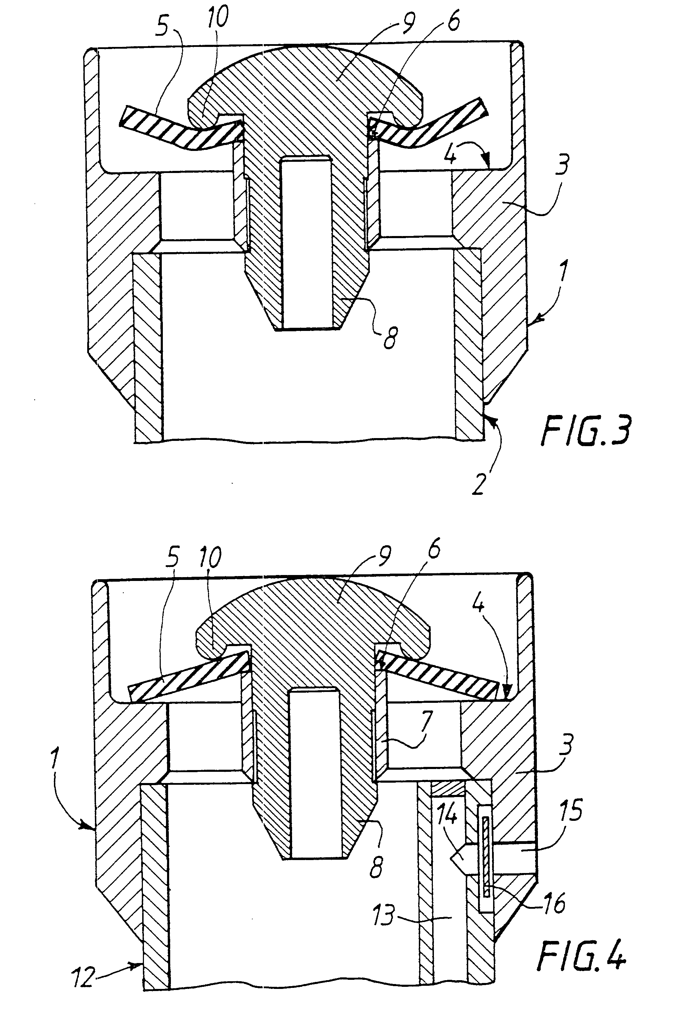

Comme on le voit sur la figure 3, lorsque du liquide sous pression arrive par le tube 2 au contact de la membrane 5, si la pression qu'il exerce sur cette membrane dépasse une valeur de consigne, généralement faible, la partie de plus grand diamètre de la membrane 5 décolle de son siège 4 et s'écarte de celui-ci sous la sollicitation du liquide pour laisser un libre passage à celui-ci. Lorsque la distribution de liquide est interrompue, la membrane 5, du fait de son élasticité, revient immédiatement sur son siège 4 et s'oppose efficacement à l'écoulement à l'extérieur du liquide restant présent en amont de cette membrane, dans le dispositif 1 de limitation de perte et dans le tube 2. Le liquide retenu est naturellement évacué lors de l'opération suivante de distribution de liquide.

La pression sous laquelle la membrane s'écartera de son siège dépendra naturellement des dimensions de cette membrane, de la position de la zone d'appui sur la membrane du bourrelet qui fait office de pivot et de la nature du matériau résilient dont elle est constituée. Néanmoins, cette pression pourra être aussi faible que 0,01.10⁵ Pa (0,01 bar), pour un dispositif équipant un pistolet distributeur de carburants d'un type usuel, la membrane restant ensuite en position écartée de son siège pour une pression encore inférieure, de l'ordre de 0,0025.10⁵ Pa (0,0025 bar).

Le dispositif conforme à l'invention ne perturbe donc pas les conditions d'opérations usuelles du distributeur de liquide. En outre, comme on le voit clairement sur les dessins, il est de dimensions réduites et il s'adapte facilement sur les organes usuels de distribution.

Il pourra être réalisé en tout matériau souhaité, notamment en des matières plastiques rigides telles que le nylon, qui permettront de l'introduire sans dommage dans les réceptacles de liquide, notamment dans les réservoirs de carburants des véhicules automobiles.

La figure 4, sur laquelle les organes déjà décrits sont désignés par les mêmes chiffres de référence, montre l'adaptation du dispositif conforme à l'invention à un tube 12 d'un organe de distribution muni d'un canal de distribution de trop-plein 13, qui communique avec l'extérieur par l'intermédiaire d'un évent 14, ménagé dans la paroi du tube 12, et par un orifice 15 ménagé dans la paroi latérale 3 de l'élément tubulaire, en regard de l'évent 14, avec interposition d'un clapet 16.

L'organe distributeur présentant un tel canal de détection de trop-plein 13 fonctionne de façon usuelle, c'est à dire qu'avec l'organe distributeur engagé dans le réceptacle de liquide, lorsque le niveau de liquide atteint la membrane 5, le canal de détection 13 commande l'arrêt automatique de l'alimentation en liquide.

Des essais ont été effectués avec un pistolet distributeur de gazole comportant un bec de type ZVA 08/PTB, commercialisé sous l'appellation ELAFLEX, équipé ou non du dispositif conforme à l'invention, en vue de mettre en évidence l'amélioration des retenues de liquide assurées par ce dispositif. Dans ce but, on a utilisé le bec soit en commandant manuellement l'arrêt de la distribution de gazole, soit en laissant cet arrêt s'effectuer automatiquement lorsque le niveau de gazole dans le réservoir à remplir atteint le pistolet, et l'on a mesuré dans ces deux conditions les pertes de liquide qui se produisent, après avoir laissé le pistolet s'égoutter dans le réservoir pendant des durées variables de 2, 5 et 10 secondes.

Les résultats obtenus sont rassemblés dans le tableau 1 ci-après, qui concerne le pistolet distributeur dépourvu du dispositif conforme à l'invention, et dans le tableau 2, qui concerne le même pistolet équipé du dispositif limiteur de pertes de liquide.

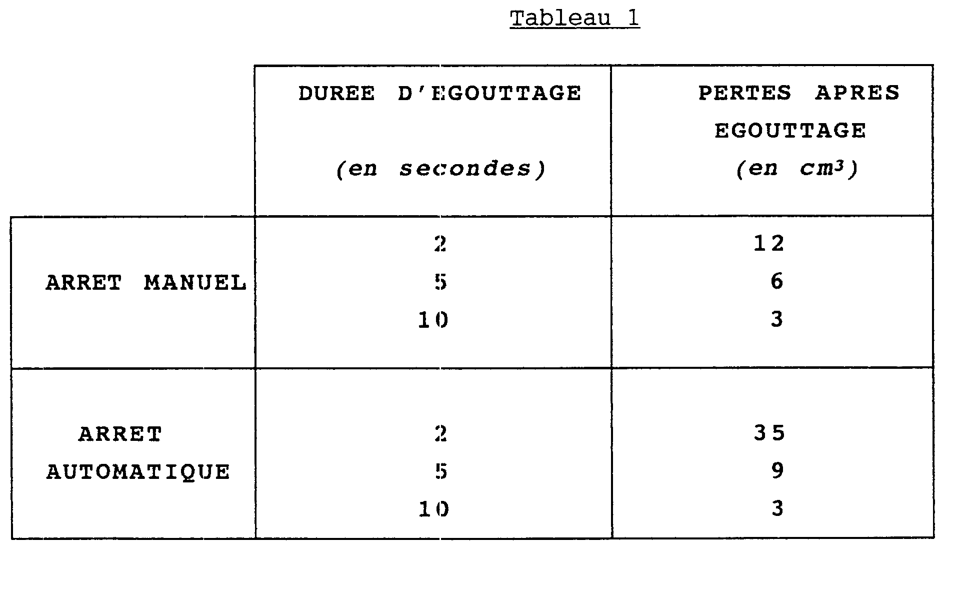

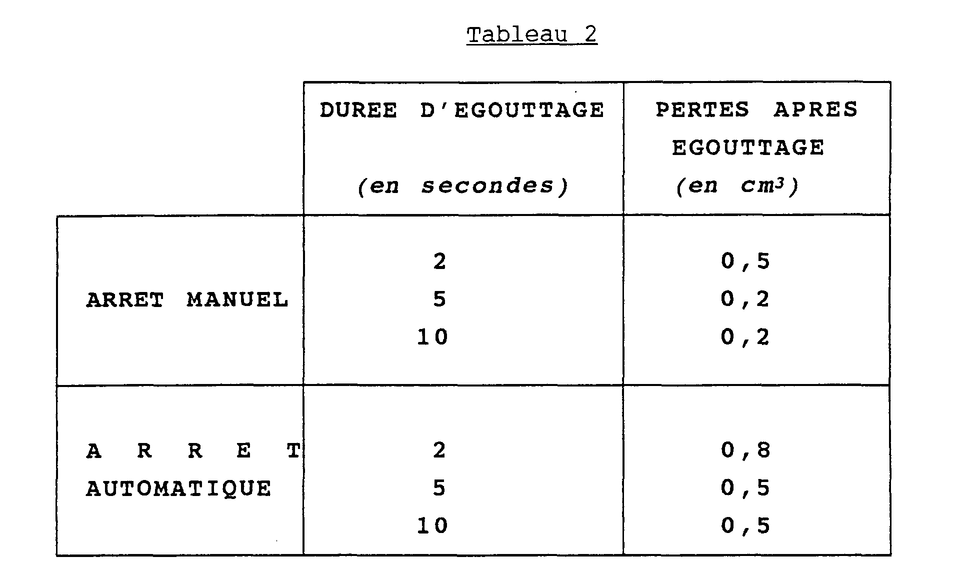

On constate que les pertes de liquide sont considérablement réduites avec le dispositif conforme à l'invention, d'un facteur qui est toujours supérieur à 10 et qui peut même atteindre 44.

Si le pistolet distributeur de gazole est utilisé deux cents fois par jour en moyenne, les pertes cumulées pour un mois d'utilisation, en l'absence du dispositif conforme à l'invention, dépassent 40 litres par mois, alors qu'avec le dispositif conforme à l'invention, elles sont de l'ordre de 1,5 litres.

Ces résultats illustrent donc clairement l'efficacité du dispositif limiteur de pertes décrit ci-dessus.

## Revendications

1. Dispositif de limitation de perte de liquide adaptable à un organe de distribution (2) d'un liquide sous pression, ce dispositif étant caractérisé en ce qu'il comprend :
- un élément tubulaire principal (3), apte à être fixé par sa périphérie à l'extrémité libre de l'organe de distribution (2), cet élément tubulaire (1) comportant une partie tubulaire interne (7) de plus petit diamètre, qui est rigidement solidaire de l'élément tubulaire (3) et coaxiale à celui-ci, des passages étant prévus pour le liquide sous pression entre la partie tubulaire interne (7) et l'élément tubulaire principal (3) ;
- une membrane élastique (5) de forme tronconique, apte à prendre appui par son extrémité de plus grand diamètre contre une première portée (4) de l'élément tubulaire (3) et par son extrémité de plus petit diamètre contre une seconde portée (6) de ladite partie tubulaire interne (7) ou d'un organe (8) solidaire de celle-ci, la seconde portée (6) étant disposée en aval de la première portée dans le sens d'écoulement du liquide ;
- un pion central dont la tige (8) est engagée dans ladite portée tubulaire, ce pion comprenant une tête (9), qui est disposée en aval de ladite membrane, dans le sens d'écoulement du liquide, et dont une partie en saillie (10) dirigée vers l'amont est en contact avec la face tournée vers l'aval de la membrane (5) ;
la membrane (5) étant déformable élastiquement, de manière à pouvoir occuper deux positions, à savoir :
* une position de repos, dans laquelle elle comporte trois zones d'appui, respectivement contre la première portée (4) et la deuxième portée (6) et contre la partie en saillie (10) de la tête (9) du pion ;
* et une position déformée, dans laquelle son extrémité de plus grand diamètre est soulevée de la première portée (4) sous la sollicitation du liquide sous pression pour laisser un libre passage à ce liquide, la membrane (5) restant toutefois en contact, dans cette position, avec la seconde portée (6) et avec la partie en saillie (10) de la tête (9) du pion.

2. Dispositif selon la revendication 1, caractérisé en ce que la zone de contact de la membrane et de la partie en saillie (10) de la tête (9) du pion est plus proche de l'extrémité aval de la membrane que de son extrémité amont.

3. Dispositif selon l'une des revendications 1 et 2, caractérisé en ce que la seconde portée (6) est constituée par l'extrémité aval de ladite partie tubulaire (7).

4. Dispositif selon l'une des revendications 1 à 3, caractérisé en ce que la première portée (4) est constituée par un épaulement interne de l'élément tubulaire principal (3).

5. Dispositif selon l'une des revendications 1 à 3, caractérisé en ce que la partie en saillie (10) de la tête (9) du pion a la forme d'un bourrelet.

6. Dispositif selon l'une des revendications 1 à 5, destiné à équiper un organe distributeur de liquide équipé d'un canal de détection de trop-plein, communiquant avec l'extérieur par un évent (14) muni d'un clapet (16), caractérisé en ce que la paroi latérale de l'organe tubulaire (13) comporte un orifice (15) apte à être amené en regard de l'évent (14), en position d'utilisation du dispositif.

7. Utilisation d'un dispositif selon l'une des revendications 1 à 6 pour équiper un organe de distribution de produits liquides.

## Claims

1. A device for limiting liquid loss which may be fitted on a dispensing member (2) for a pressurised liquid, said device being characterised in that it comprises:
- a main tubular component (3), capable of being fixed by its periphery to the free end of the dispensing member (2), said tubular component (1) comprising an inner tubular portion (7) of smaller diameter, which is rigidly connected with the tubular component (3) and coaxial therewith, passages being provided for the pressurised liquid between the inner tubular portion (7) and the main tubular component (3);
- a resilient diaphragm (5) in the form of a truncated cone, capable of resting via its larger diameter end against a first bearing surface (4) on the tubular component (3) and via its smaller diameter end against a second bearing surface (6) on said inner tubular portion (7) or on a member (8) integral therewith, the second bearing surface (6) being disposed downstream of the first bearing surface in the direction of liquid flow;
- a central pin, the stem (8) of which is engaged in said tubular bearing surface, said pin comprising a head (9), which is disposed downstream of said diaphragm, in the direction of liquid flow, and of which a projecting portion (10) oriented in the upstream direction is in contact with the face of the diaphragm (5) oriented in the downstream direction;
the diaphragm (5) being resiliently deformable, in such a way as to be able to occupy two positions, that is to say:
* a rest position, in which it comprises three bearing zones, bearing respectively against the first bearing surface (4) and the second bearing surface (6) and against the projecting portion (10) of the head (9) of the pin;
* and a deformed position, in which its larger diameter end is raised from the first bearing surface (4) under the action of the pressurised liquid, so as to allow free passage for said liquid, the diaphragm (5) remaining in contact in this position, however, with the second bearing surface (6) and with the projecting portion (10) of the head (9) of the pin.

2. A device according to claim 1, characterised in that the zone of contact between the diaphragm and the projecting portion (10) of the head (9) of the pin is closer to the downstream end of the diaphragm than its upstream end.

3. A device according to one of claims 1 and 2, characterised in that the second bearing surface (6) consists of the downstream end of said tubular portion (7).

4. A device according to one of claims 1 to 3, characterised in that the first bearing surface (4) consists of an inner shoulder of the main tubular component (3).

5. A device according to one of claims 1 to 3, characterised in that the projecting portion (10) of the head (9) of the pin takes the form of a bead.

6. A device according to one of claims 1 to 5, intended for equipping a liquid dispensing member equipped with an overflow detection channel, communicating with the outside by a vent (14) provided with a clack valve (16), characterised in that the side wall of the tubular member (13) comprises an orifice (15) capable of being brought into a position opposite the vent (14), when the device is in the position of use.

7. Use of a device according to one of claims 1 to 6 for equipping a liquid product dispensing member.

## Patentansprüche

1. Abgabe- bzw. Abfüllorgan (2) für eine unter Druck stehende Flüssigkeit anpassbare Vorrichtung zur Begrenzung von Flüssigkeitsverlust, dadurch gekennzeichnet, dass die Vorrichtung umfasst:
- ein Haupt-Rohrelement (3), das an seinem Umfang am freien Ende des Abgabe- bzw. Abfüllorgans (2) befestigbar ist, wobei dieses Rohrelement (1) ein Innenrohrteil (7) kleineren Durchmessers aufweist, das mit dem Rohrelement (3) starr fest verbunden und zu diesem koaxial ist, und wobei zwischen dem Innenrohrteil (7) und dem Haupt-Rohrelement (3) Durchlässe für die druckbeaufschlagte Flüssigkeit vorgesehen sind;
- eine kegelstumpfförmige elastische Membran (5), die sich mit ihrem Ende größeren Durchmessers gegen eine erste Auflage-bzw. Sitzfläche (4) des Rohrelements (3) und mit ihrem Ende kleineren Durchmessers gegen eine zweite Auflage- bzw. Sitzfläche (6) des genannten Innenrohrteils (7) oder eines mit diesem verbundenen Organs (8) abstützen kann, wobei die zweite Auflage- bzw. Sitzfläche (6) in Strömungsrichtung der Flüssigkeit gesehen stromabwärts der ersten Auflage- bzw. Sitzfläche angeordnet ist;
- ein Mittelstück, dessen Schaft bzw. Stiel (8) in die genannte rohrförmige Auflage bzw. Sitzfläche eingreift und das ein Kopfteil (9) umfasst, welches in Strömungsrichtung der Flüssigkeit gesehen stromabwärts der genannten Membran angeordnet ist und einen stromaufwärts gerichteten vorspringenden bzw. überstehenden Teil (10) aufweist, der mit der stromabwärts gerichteten Seite der Membran (5) in Berührung steht;
- wobei die Membran (5) elastisch verformbar ist, derart dass sie zwei Stellungen einnehmen kann, nämlich:
* eine Ruhestellung, in welcher sie drei Abstütz- bzw. Anlagezonen umfasst, und zwar gegen die erste (4) bzw. die zweite (6) Auflage- bzw. Sitzfläche sowie gegen den vorspringenden bzw. überstehenden Teil (10) des Mittelstück-Kopfteils (9);
* und eine verformte oder Auslenkstellung, in welcher ihr Ende größeren Durchmessers unter der Wirkung der druckbeaufschlagten Flüssigkeit von der ersten Auflage- bzw. Sitzfläche (4) abgehoben ist und einen Durchlass für diese Flüssigkeit freilässt, wobei die Membran (5) jedoch in dieser Stellung in Berührung mit der zweiten Auflage- bzw. Sitzfläche (6) und mit dem vorspringenden bzw. überstehenden Teil (10) des Mittelstück-Kopfes (9) verbleibt.

2. Vorrichtung nach Anspruch 1, dadurch gekennzeichnet, dass die Berührungszone der Membran mit dem vorspringenden bzw. überstehenden Teil (10) des Mittelstück-Kopfs (9) näher dem stromabwärtigen Ende der Membran als deren stromaufwärtigen Ende liegt.

3. Vorrichtung nach einem der Ansprüche 1 und 2, dadurch gekennzeichnet, dass die zweite Auflage- bzw. Sitzfläche (6) von dem stromabwärtigen Ende des genannten Rohrteils (7) gebildet wird.

4. Vorrichtung nach einem der Ansprüche 1 bis 3, dadurch gekennzeichnet, dass die erste Auflage- bzw. Sitzfläche (4) von einer Innenschulter des Haupt-Rohrteils (3) gebildet wird.

5. Vorrichtung nach einem der Ansprüche 1 bis 3, dadurch gekennzeichnet, dass der vorspringende bzw. überstehende Teil (10) des Mittelstück-Kopfteils (9) die Form einer Flanschwulst besitzt.

6. Vorrichtung nach einem der Ansprüche 1 bis 5, mit Bestimmung zur Ausrüstung eines Flüssigkeitsabgabe- bzw. Abfüllorgans, das mit einem Kanal zum Nachweis der Überfüllung versehen ist, der mit dem Äußeren durch eine mit einer Ventilklappe versehenen Öffnung (14) in Verbindung steht, dadurch gekennzeichnet, dass die Seitenwandung des rohrförmigen Organs (13) eine Mündungs- bzw. Austrittsöffnung (15) aufweist, die in der Gebrauchsstellung der Vorrichtung in Ausrichtung mit der Ventilöffnung (14) gebracht werden kann.

7. Anwendung der Vorrichtung nach einem der Ansprüche 1 bis 6 zur Ausrüstung eines Abgabe- bzw. Abfüllorgans für flüssige Produkte.
